# EUROPEAN PATENT SPECIFICATION

(11) **EP 2 102 259 B1**
(45) Date of publication and mention of the grant of the patent: **27.06.2012**
(21) Application number: 07857336.7
(22) Date of filing: 10.12.2007
(51) Int. Cl.: C08F 220/06, C08F 290/02, C08F 290/06, C11D 3/37, C08F 220/26, C08F 220/34, C08F 222/10, C08F 226/06, C08F 226/10, C08F 2/38

(54) **POLYMERS**
POLYMERE
POLYMÈRES

(30) Priority: 12.12.2006 EP 06125937; 12.12.2006 EP 06125934; 12.12.2006 EP 06125932; 12.12.2006 EP 06125940
(43) Date of publication of application: 23.09.2009
(73) Proprietor: Unilever PLC, London EC4Y 0DY (GB); Unilever N.V., 3013 AL Rotterdam (NL)
(72) Inventor: FINDLAY, Paul Hugh, Bebington, Wirral Merseyside CH63 3JW (GB); RANNARD, Steven Paul, Mickle Trafford Chester CH2 4EJ (GB); ROYLES, Brodyck James Lachlan, Bebington Wirral Merseyside CH63 3JW (GB); WEAVER, Jonathan Victor Mark, Hoole Chester CH2 3PN (GB)
(74) Representative: Teasdale, Nicola Joanne
(86) International application number: PCT/EP2007/063616
(87) International publication number: WO 2008/071662

(56) References cited:
- EP-A- 0 547 847
- EP-A- 1 686 143
- DE-A1- 10 344 411
- DE-A1- 19 923 432
- US-A- 4 508 880
- US-A- 5 334 681
- US-B1- 6 336 966

## Description

The present invention relates to branched polymers, a method for their preparation, compositions containing such copolymers and their use as, for instance, colloid stabilising agents.

Branched polymers are polymer molecules engineered to have a finite size, unlike cross-linked, polymers which grow while monomer is available and can be arbitrarily large. In contrast to cross-linked polymers, branched polymers are more soluble. Advantageously, solutions of branched polymers are less viscous than those of analogous linear polymers. Large branched copolymers are solubilised more easily than corresponding linear polymers. Branched polymers with many end groups can exhibit stronger surface-modification properties. Branched polymers are useful components of many compositions utilised in a variety of fields.

Comb or graft polymers are an architectural subset of branched polymers with large, often polymeric, pendant groups attached to a backbone.

Branched polymers are usually prepared via a step-growth mechanism through the polycondensation of a suitable monomer which are usually limited via the chemical functionality of the resulting polymer and the molecular weight. In addition polymerisation, a one-step process can be used in which a multifunctional monomer is used to provide functionality in the polymer chain from which polymer branches may grow. However, a limitation on the use of conventional one-step processes is that the amount of multifunctional monomer must be carefully controlled, usually to substantially less than 0.5% w/w in order to avoid extensive cross-linking of the polymer and the formation of insoluble gels. It is difficult to avoid crosslinking using this method, especially in the absence of a solvent as diluent and/or at high conversion of monomer to polymer.

Graft or comb polymers are usually prepared via the attachment or growth of oligomeric or monomeric units respectively from a pre-formed linear polymer. Alternatively, they can be prepared via the addition polymerisation of oligomeric monomers, or "macromonomers", with a conventional monomer or mixture of smaller monomer units.

Linear block copolymers are usually prepared via the living polymerisation of one monomer to completion followed by the subsequent addition of a further, and usually different, monomer to attain a block-structure. Living polymerisation can also occur from a pre-formed polymer or oligomer at either one terminus or both to give what is known as an AB or ABA block copolymer respectively.

Branched external block copolymers can be thought of as having an external, or coronal, block structure in relation to the more branched core. When prepared with a large molecular weight brancher or monomer, these polymers would also posses internal block and graft architectures respectively.

Branched graft-block copolymers can be thought of as having an internal block structure, together with a graft structure in a branched polymer architecture.

WO 99/46301 discloses a method of preparing a branched polymer comprising the steps of mixing together a monofunctional vinylic monomer with from 0.3 to 100% w/w (of the weight of the monofunctional monomer) of a multifunctional vinylic monomer and from 0.0001 to 50% w/w (of the weight of the monofunctional monomer) of a chain transfer agent and optionally a free-radical polymerisation initiator and thereafter reacting said mixture to form a copolymer. The examples of WO 99/46301 describe the preparation of primarily hydrophobic polymers and, in particular, polymers in which methyl methacrylate constitutes the monofunctional monomer. These polymers are useful as components of surface coatings and inks or as moulding resins.

WO 02/34793 discloses a copolymer composition comprising a copolymer derived from at least one unsaturated carboxylic acid monomer, at least one hydrophobic monomer, a hydrophobic chain transfer agent, a crosslinking agent, and, optionally, a steric stabiliser. The copolymer composition acts as a rheology modifier in that it provides increased viscosity in aqueous electrolyte-containing environments.

WO 02/16442 discloses a cross-linked hydrogel composition, that has been produced by a free-radical polymerisation process, from monofucntional and polyfunctional monomers. A chain transfer agent is not applied, and the polymer complexes are formed into micro-particles in a free-radical dispersion polymerisation.

DE 199 23 432 A1 relates to defoamer powders which comprise, in addition to the defoamer formulation, fillers and pulverulent carrier material, at least one linear and/or branched vinyl polymer. The defoamers are used in particular in solid detergents and cleaning compositions.

Therefore it is an object of the present invention to provide a polymer that is more soluble than crosslinked polymers and that does not increase the viscosity when dissolved.

It has now been found that branched non-crosslinked polymers are obtainable by a addition polymerisation method, preferably a free-radical polymerisation process, and said polymers do not increase viscosity when dissolved in a solvent, and that have a variety of applications as a result of their advantageous properties.

Accordingly, a first aspect of the invention provides a branched polymer obtainable by an addition polymerisation process, which is the reaction product of:
(a) an initiator,
(b) a compatible chain transfer agent (E and E'),
(c) at least one ethyleneically monounsaturated monomer (G and/or J).
(d) at least one ethyleneically polyunsaturated monomer (L),
wherein at least one of (a)-(d) has a molecular weight of at least 1000 Daltons, and the mole ratio of (d) to (c) is greater than 0.0005 to 1 and having the general formula 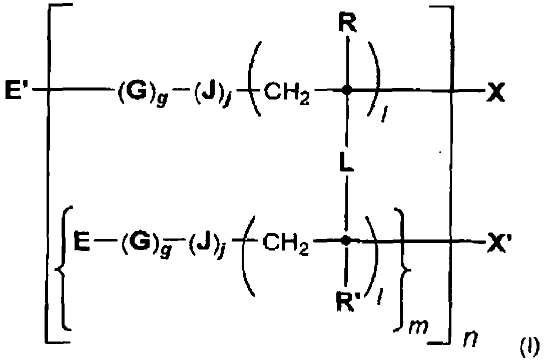 in which
E and E' each independently represent a residue of a chain transfer agent or an initiator;
G and J each independently represent a residue of a monofunctional monomer having one polymerisable double bond per molecule;
L is a residue of a multifunctional monomer having at least two polymerisable double bonds per molecule;
R and R' each independently represent a hydrogen atom or an optionally substituted alkyl group;
X and X' each independently represent a terminal group derived from a termination reaction;
g, j and l represent the molar ratio of each residue normalised so that g + j = 100, wherein g and j each independently represent 0 to 100, and l is ≥ 0.05 ; and
m and n are each independently ≥ 1; and
at least one of E, E', G, J, and L has a molecular weight of at least 1000 Daltons and in which the residue of the chain transfer agent comprises 0.05 to 30 mole% based on the number of moles of the monofunctional monomer, of the copolymer and in which the chain transfer agent is selected from monofunctional and multifunctional thiols and catalytic chain transfer agents.

A second aspect of the invention provides a method of preparing such a branched copolymer by an addition polymerisation process, preferably a free-radical polymerisation process,
which comprises mixing together
(a) at least one monofunctional monomer;
(b) at least 0.05 mole% (based on the number of moles of monofunctional monomer) of a multifunctional monomer;
(c) a chain transfer agent; and
(d) an initiator;
and subsequently reacting said mixture to form a branched copolymer.

In a third aspect, the invention provides a composition, comprising a branched copolymer as defined above and a carrier.

In a fourth aspect, the invention provides use of a branched copolymer as defined above as a constituent of a laundry composition.

In a fifth aspect, the invention provides use of a branched copolymer as defined above as a colloid stabilising agent.

### Definitions

The following definitions pertain to chemical structures, molecular segments and substituents :
The term "alkyl" as used herein refers to a branched or unbranched saturated hydrocarbon group which may contain from 1 to 12 carbon atoms, such as methyl, ethyl, n-propyl, isopropyl, n-butyl, isobutyl, t-butyl, octyl, decyl etc.
More preferably, an alkyl group contains from 1 to 6, preferably 1 to 4 carbon atoms. Methyl, ethyl and propyl groups are especially preferred. "Substituted alkyl" refers to alkyl substituted with one or more substituent groups.
Preferably, alkyl and substituted alkyl groups are unbranched.

Typical substituent groups include, for example, halogen atoms, nitro, cyano, hydroxyl, cycloalkyl, alkyl, alkenyl, haloalkyl, alkoxy, haloalkoxy, amino, alkylamino, dialkylamino, formyl, alkoxycarbonyl, carboxyl, alkanoyl, alkylthio, alkylsulfinyl, alkylsulfonyl, alkylsulfonato, arylsulfinyl, arylsulfonyl, arylsulfonato, phosphinyl, phosphonyl, carbamoyl, amido, alkylamido, aryl, aralkyl and quaternary ammonium groups, such as betaine groups. Of these substituent groups, halogen atoms, cyano, hydroxyl, alkyl, haloalkyl, alkoxy, haloalkoxy, amino, carboxyl, amido and quaternary ammonium groups, such as betaine groups, are particularly preferred. When any of the foregoing substituents represents or contains an alkyl or alkenyl substituent group, this may be linear or branched and may contain up to 12, preferably up to 6, and especially up to 4, carbon atoms. A cycloalkyl group may contain from 3 to 8, preferably from 3 to 6, carbon atoms. An aryl group or moiety may contain from 6 to 10 carbon atoms, phenyl groups being especially preferred. A halogen atom may be a fluorine, chlorine, bromine or iodine atom and any group which contains a halo moiety, such as a haloalkyl group, may thus contain any one or more of these halogen atoms.
In the context of this specification, the terms "cleaning" and/or " laundering" mean "washing and/or rinsing".

Terms such as "(meth)acrylic acid" embrace both methacrylic acid and acrylic acid. Analogous terms should be construed similarly.

Terms such as "alk/aryl" embrace alkyl, alkaryl, aralkyl (e.g. benzyl) and aryl groups and moieties.

Molar percentages are based on the total monofunctional monomer content.

Molecular weights of monomers and polymers are expressed as weight average molecular weights, except where otherwise specified.

### The Copolymers

A branched polymer according to the invention is obtainable by an addtion polymerisation process, preferably a free radical polymerisation process, and is the reaction product of:
(a) an initiator, optionally but preferably a free-radical initiator,
(b) a compatible chain transfer agent (E and E'),
(c) at least one ethyleneically monounsaturated monomer (G and/or J),
(d) at least one ethyleneically polyunsaturated monomer (L),
wherein at least one of (a)-(d) has a molecular-weight of at least 1000 Daltons, and the mole ratio of (d) to (c) is greater than 0.0005 to 1.

The branched polymers of the invention are branched, non-crosslinked addition polymers and include statistical, gradient and alternating branched copolymers. The branched polymer of the present invention has the general formula 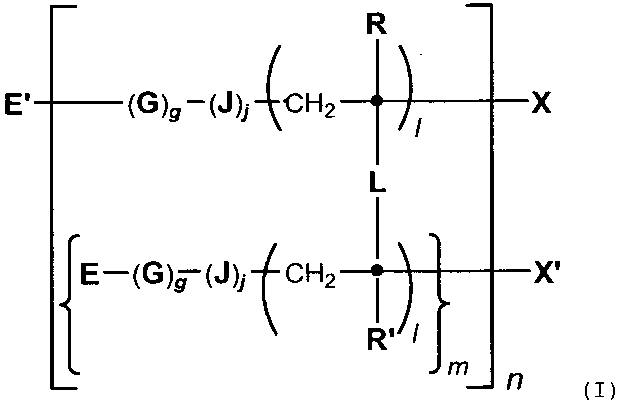 in which
E and E' each independently represent a residue of a chain transfer agent or an initiator;
G and J each independently represent a residue of a monofunctional monomer having one polymerisable double bond per molecule;
L is a residue of a multifunctional monomer having at least two polymerisable double bonds per molecule;
R and R' each independently represent a hydrogen atom or an optionally substituted alkyl group;
X and X' each independently represent a terminal group derived from a termination reaction;
g, j and l represent the molar ratio of each residue normalised so that g + j = 100, wherein g and j each independently represent 0 to 100; and l is ≥ 0.05; and m and n are each independently ≥ 1; and
at least one of E, E', G, J, and L has a molecular weight of at least 1000 Daltons.

A preferred polymer according to the invention is a comb or graft branched polymer, wherein at least one of G and J has a molecular weight of at least 1000 Daltons, and L has a molecular weight of 1000 Daltons or less. More preferably the other of G and J in said copolymer, if present, has a molecular weight of 1000 Daltons or less. Most preferred the monofunctional monomer having a molecular weight of at least 1000 Daltons is a hydrophilic monomer. Even more preferred, the chain transfer agent has a molecular weight of 1000 Daltons or less.

Another preferred polymer according to the invention is a branched internal block copolymer, wherin G and J have a molecular weight of 1000 Daltons or less, and L has a molecular weight of at least 1000 Daltons. More preferred the chain transfer agent has a molecular weight of 1000 Daltons or less.

Another preferred polymer according to the invention is a branched external block copolymer, wherein the chain transfer agent has a molecular weight of at least 1000 Daltons, and G, J, and L have a molecular weight of 1000 Daltons or less.

Even another preferred polymer according to the invention is a branched graft-block copolymer, wherein G, J, and L have a molecular weight of at least 1000 Daltons. More preferred the chain transfer agent has a molecular weight of at least 1000 Daltons.

The copolymer may also contain unreacted vinyl groups from the multifunctional monomer.

### Monofunctional monomer

The monofunctional monomer may comprise any carbon-carbon unsaturated compound which can be polymerised by an addition polymerisation mechanism, e.g. vinyl and allyl compounds. The monofunctional monomer may be hydrophilic, hydrophobic, amphiphilic, anionic, cationic, neutral or zwitterionic in nature. The monofunctional monomer may be selected from but not limited to monomers such as vinyl acids, vinyl acid esters, vinyl aryl compounds, vinyl acid anhydrides, vinyl amides, vinyl ethers, vinyl amines, vinyl aryl amines, vinyl nitriles, vinyl ketones, and derivatives of the aforementioned compounds as well as corresponding allyl variants thereof. Other suitable monofunctional monomers include hydroxyl-containing monomers and monomers which can be post-reacted to form hydroxyl groups, acid-containing or acid functional monomers, zwitterionic monomers and quaternised amino monomers. If G and/or J have a molecular weight above 1000 Daltons, oligomeric polymeric or oligo- or poly-functionalised monomers may also be used, especially oligomeric or polymeric (meth)acrylic acid esters such as mono(alk/aryl) (meth)acrylic acid esters of poly(alkyleneglycol) or poly(dimethylsiloxane) or any other mono-vinyl or allyl adduct of a polymer or oligomer. Mixtures of more than one monomer may also be used to give statistical, gradient or alternating copolymers. Thus, G and J each independently represent a residue of a monofunctional monomer as described above.

Vinyl acids and derivatives thereof include (meth)acrylic acid and acid halides thereof such as (meth)acryloyl chloride. Vinyl acid esters and derivatives thereof include C1-20 alkyl(meth)acrylates (linear & branched) such as methyl (meth)acrylate, stearyl (meth)acrylate and 2-ethyl hexyl (meth)acrylate, aryl(meth)acrylates such as benzyl (meth)acrylate, tri(alkyloxy)silylalkyl(meth)acrylates such as trimethoxysilylpropyl(meth)acrylate and activated esters of (meth)acrylic acid such as N-hydroxysuccinamido (meth)acrylate. Vinyl aryl compounds and derivatives thereof include styrene, acetoxystyrene, styrene sulfonic acid, vinyl pyridine, vinylbenzyl chloride and vinyl benzoic acid. Vinyl acid anhydrides and derivatives thereof include maleic anhydride. Vinyl amides and derivatives thereof include (meth)acrylamide, N-vinyl pyrrolidone, N-vinyl formamide, (meth)acrylamidopropyl trimethyl ammonium chloride, [3-((meth)acrylamido)propyl]dimethyl ammonium chloride, 3-[N-(3-(meth)acrylamidopropyl)-N,N-dimethyl]aminopropane sulfonate, methyl (meth)acrylamidoglycolate methyl ether and N-isopropyl(meth)acrylamide. Vinyl ethers and derivatives thereof include methyl vinyl ether. Vinyl amines and derivatives thereof include dimethylaminoethyl (meth)acrylate, diethylaminoethyl (meth)acrylate, diisopropylaminoethyl (meth)acrylate, mono-t-butylaminoethyl (meth)acrylate, morpholinoethyl(meth)acrylate and monomers which can be post-reacted to form amine groups, such as vinyl formamide. Vinyl aryl amines and derivatives thereof include vinyl aniline, vinyl pyridine, N-vinyl carbazole and vinyl imidazole. Vinyl nitriles and derivatives thereof include (meth)acrylonitrile. Vinyl ketones and derivatives thereof include acreolin.

Hydroxyl-containing monomers include vinyl hydroxyl monomers such as hydroxyethyl (meth)acrylate, hydroxy propyl (meth)acrylate, glycerol mono(meth)acrylate and sugar mono(meth)acrylates such as glucose mono(meth)acrylate. Monomers which can be post-reacted to form hydroxyl groups include vinyl acetate, acetoxystyrene and glycidyl (meth)acrylate. Acid-containing or acid functional monomers include (meth)acrylic acid, styrene sulfonic acid, vinyl phosphonic acid, vinyl benzoic acid, maleic acid, fumaric acid, itaconic acid, 2-(meth)acrylamido 2-ethyl propanesulfonic acid, mono-2-((meth)acryloyloxy)ethyl succinate and ammonium sulfatoethyl (meth)acrylate. Zwitterionic monomers include (meth)acryloyl oxyethylphosphoryl choline and betaine-containing monomers, such as [2-((meth)acryloyloxy)ethyl] dimethyl-(3-sulfopropyl)ammonium hydroxide. Quaternised amino monomers include (meth)acryloyloxyethyltri-(alk/aryl)ammonium halides such as (meth)acryloyloxyethyltrimethyl ammonium chloride.

Polymeric monomers include polymeric (meth)acrylic acid esters such as mono(alk/aryl)oxypolyalkyleneoxide(meth)acrylates and mono(alk/aryl)oxypolydimethylsiloxane(meth)acrylates. These esters include monomethoxy poly(ethyleneglycol) mono(meth)acrylate, monomethoxy poly(propyleneglycol) mono(meth)acrylate, monohydroxy poly(ethyleneglycol) mono(meth)acrylate and monohydroxy poly(propyleneglycol) mono(meth)acrylate. Further examples include vinyl or allyl esters, amides or ethers of pre-formed (co)polymers formed via ring-opening polymerisation such as poly(caprolactam) or poly(caprolactone), or polymers formed via a living polymerisation technique such as poly(1,4-butadiene). The corresponding oligomers can also be used where appropriate. The corresponding allyl monomers to those listed above can also be used where appropriate.

More preferred monomers include:
amide-containing monomers such as (meth)acrylamide, N,N'-dimethyl(meth)acrylamide, N and/or N'-di(alkyl or aryl) (meth)acrylamide, N-vinyl pyrrolidone, [3-((meth)acrylamido)propyl] trimethyl ammonium chloride, 3-(dimethylamino)propyl(meth)acrylamide, 3-[N-(3-(meth)acrylamidopropyl)-N,N-dimethyl]aminopropane sulfonate, methyl (meth)acrylamidoglycolate methyl ether and N-isopropyl(meth)acrylamide;
(meth)acrylic acid and derivatives thereof such as (meth)acrylic acid, (meth)acryloyl chloride (or any halide), (alkyl/aryl)(meth)acrylate, functionalised polymeric monomers such as monomethoxy poly(ethyleneglycol) mono(meth)acrylate, monomethoxy poly(propyleneglycol) mono(meth)acrylate, monohydroxy poly(ethyleneglycol) mono(meth)acrylate, monohydroxy poly(propyleneglycol) mono(meth)acrylate, glycerol mono(meth)acrylate and sugar mono(meth)acrylates such as glucose mono(meth)acrylate; vinyl amines such as amino ethyl (meth)acrylate, dimethylaminoethyl (meth)acrylate, diethylaminoethyl (meth)acrylate, diisopropylaminoethyl (meth)acrylate, mono-t-butylaminoethyl (meth)acrylate, morpholinoethyl(meth)acrylate, vinyl aryl amines such as vinyl aniline, vinyl pyridine, N-vinyl carbazole, vinyl imidazole, and monomers which can be post-reacted to form amine groups, such as vinyl formamide;
vinyl aryl monomers such as styrene, vinyl benzyl chloride, vinyl toluene, α-methyl styrene, styrene sulfonic acid and vinyl benzoic acid;
vinyl hydroxyl monomers such as hydroxyethyl (meth)acrylate, hydroxy propyl (meth)acrylate, glycerol (meth)acrylate or monomers which can be post-functionalised into hydroxyl groups such as vinyl acetate, acetoxy styrene and glycidyl (meth)acrylate;
acid-containing monomers such as (meth)acrylic acid, styrene sulfonic acid, vinyl phosphonic acid, vinyl benzoic acid, maleic acid, fumaric acid, itaconic acid, 2-(meth)acrylamido 2-ethyl propanesulfonic acid and mono-2-((meth)acryloyloxy)ethyl succinate or acid anhydrides such as maleic anhydride;
zwitterionic monomers such as (meth)acryloyl oxyethylphosphoryl choline and betaines, such as [2-((meth)acryloyloxy)ethyl] dimethyl-(3-sulfopropyl)ammonium hydroxide;
quaternised amino monomers such as (meth)acryloyloxyethyltrimethyl ammonium chloride.

The corresponding allyl monomer, where applicable, can also be used in each case.

Macromonomers (monomers having a molecular weight of at least 1000 Daltons) are generally formed by linking a polymerisable moiety, such as a vinyl or allyl group, to a pre-formed monofunctional polymer via a suitable linking unit such as an ester, an amide or an ether. Examples of suitable polymers include mono functional poly(alkylene oxides) such as monomethoxy[poly(ethyleneglycol)] or monomethoxy[poly(propyleneglycol)], silicones such as poly(dimethylsiloxane)s, polymers formed by ring-opening polymerisation such as poly(caprolactone) or poly(caprolactam) or mono-functional polymers formed via living polymerisation such as poly(1,4-butadiene).

Preferred macromonomers include monomethoxy[poly(ethyleneglycol)] mono(methacrylate), monomethoxy[poly(propyleneglycol)] mono(methacrylate) and mono(meth)acryloxypropyl-terminated poly(dimethylsiloxane).

Functional monomers, i.e. monomers with reactive pendant groups which can be post or pre-modified with another moiety following polymerisation can also be used such as glycidyl (meth)acrylate, tri(alkyloxy)silylalkyl(meth)acrylates, (meth)acryloyl chloride, maleic anhydride, hydroxyalkyl (meth)acrylates, (meth)acrylic acid, vinylbenzyl chloride, activated esters of (meth)acrylic acid such as N-hydroxysuccinamido (meth)acrylate and acetoxystyrene.

### Multifunctional monomer

The multifunctional monomer or brancher may comprise a molecule containing at least two vinyl groups which may be polymerised via addition polymerisation. The molecule may be hydrophilic, hydrophobic, amphiphilic, neutral, cationic, zwitterionic or oligomeric. Such molecules are often known as crosslinking agents in the art and may be prepared by reacting any di or multifunctional molecule with a suitably reactive monomer. The multifunctional monomer must have a molecular weight of 1,000 Daltons or less. Examples include di- or multivinyl esters, di- or multivinyl amides, di- or multivinyl aryl compounds and di-or multivinyl alk/aryl ethers. Typically, in the case of oligomeric or multifunctional branching agents, a linking reaction is used to attach a polymerisable moiety to a di-or multifunctional oligomer or a di- or multifunctional group. The brancher may itself have more than one branching point, such as T-shaped divinylic oligomers. In some cases, more than one multifunctional monomer may be used.

The corresponding allyl monomers to those listed above can also be used where appropriate.

Preferred multifunctional monomers include but are not limited to divinyl aryl monomers such as divinyl benzene; (meth)acrylate diesters such as ethylene glycol di(meth)acrylate, propyleneglycol di(meth)acrylate and 1,3-butylenedi(meth)acrylate; oligoalkylene oxide di(meth)acrylates such as tetraethyleneglycol di(meth)acrylate, oligo(ethyleneglycol) di(meth)acrylate and oligo(propyleneglycol) di(meth)acrylate; divinyl acrylamides such as methylene bisacrylamide; silicone-containing divinyl esters or amides such as (meth)acryloxypropyl-terminated oligo(dimethylsiloxane); divinyl ethers such as oligo(ethyleneglycol)divinyl ether; and tetra- or tri-(meth)acrylate esters such as pentaerythritol tetra(meth)acrylate, trimethylolpropane tri(meth)acrylate or glucose di- to penta(meth)acrylate. Further examples include vinyl or allyl esters, amides or ethers of pre-formed oligomers formed via ring-opening polymerisation such as oligo(caprolactam) or oligo(caprolactone), or oligomers formed via a living polymerisation technique such as oligo(1,4-butadiene).

Macrocrosslinkers or macrobranchers (multifunctional monomers having a molecular weight of at least 1000 Daltons) are generally formed by linking a polymerisable moiety, such as a vinyl or aryl group, to a pre-formed multifunctional polymer via a suitable linking unit such as an ester, an amide or an ether. Examples of suitable polymers include di-functional poly(alkylene oxides) such as poly(ethyleneglycol) or poly(propyleneglycol), silicones such as poly(dimethylsiloxane)s, polymers formed by ring-opening polymerisation such as poly(caprolactone) or poly(caprolactam) or poly-functional polymers formed via living polymerisation such as poly(1,4-butadiene).

Preferred macrobranchers include poly(ethyleneglycol) di(meth)acrylate, poly(propyleneglycol) di(meth)acrylate, (meth)acryloxypropyl-terminated poly(dimethylsiloxane), poly(caprolactone) di(meth)acrylate and poly(caprolactam) di(meth)acrylamide.

Thus, L is a residue of a multifunctional monomer as described above.

The copolymer must contain a multifunctional monomer. In other words, 1 is ≥ 0.05 in formula (I). It is preferably 0.05 to 50, more preferably 0.05 to 40, particularly 0.05 to 30 and especially 0.05 to 15.

### Chain transfer agent

The chain transfer agent is a molecule which is known to reduce molecular weight during a free-radical polymerisation via a chain transfer mechanism. These agents may be any thiol- containing molecule and can be either monofunctional or polyfunctional. The agent may be hydrophilic, hydrophobic, amphiphilic, anionic, cationic, neutral or zwitterionic. The molecule can also be an oligomer containing a thiol moiety. (The agent may also be a hindered alcohol or similar free-radical stabiliser). Catalytic chain transfer agents such as those based on transition metal complexes such as cobalt bis(borondifluorodimethyl-glyoximate) (CoBF) may also be used. Suitable thiols include but are not limited to C2-C18 alkyl thiols such as dodecane thiol, thioglycolic acid, thioglycerol, cysteine and cysteamine. Thiol-containing oligomers or polymers may also be used such as oligo(cysteine) or an oligomer which has been post-functionalised to give a thiol group(s), such as oligoethylene glycolyl (di)thio glycollate. Xanthates, dithioesters, and dithiocarbonates may also be used, such as cumyl phenyldithioacetate. Alternative chain transfer agents may be any species known to limit the molecular weight in a free-radical addition polymerisation including alkyl halides and transition metal salts or complexes. More than one chain transfer agent may be used in combination.

The residue of the chain transfer agent comprises 0.05 to 30 mole%, of the copolymer (based on the number of moles of monofunctional monomer).

The initiator is a free-radical initiator and can be any molecule known to initiate free-radical polymerisation such as azo-containing molecules, persulfates, redox initiators, peroxides, benzyl ketones. These may be activated via thermal, photolytic or chemical means. Examples of these include but are not limited to 2,2'-azobisisobutyronitrile (AIBN), azobis(4-cyanovaleric acid), benzoyl peroxide, cumylperoxide, 1-hydroxycyclohexyl phenyl ketone, hydrogenperoxide/ascorbic acid. Iniferters such as benzyl-N,N-diethyldithiocarbamate can also be used. In some cases, more than one initiator may be used.

Preferably, the residue of the initiator in a free-radical polymerisation comprises 0 to 5% w/w, preferably 0.01 to 5% w/w and especially 0.01 to 3% w/w, of the copolymer based on the total weight of the monomers.

A chain transfer agent and an initiator is used. However, some molecules can perform both functions. Preferably, one of E and E' represents the residue of a chain transfer agent and the other of E and E' represents the residue of an initiator.

It is preferred that R and R' in formula (I) each independently represent a hydrogen atom or a C1-4 alkyl group.

X and X' each independently represent a terminal group derived from a termination reaction. During conventional radical polymerisation, some inherent and unavoidable termination reactions occur. Common termination reactions between free-radicals are typically bimolecular combination and disproportionation reactions which vary depending on the monomer structure and result in the annihilation of two radicals. Disproportionation reactions are thought to be the most common, especially for the polymerisation of (meth)acrylates, and involve two dead primary chains, one with a hydrogen terminus (X or X' = H) and the other with a carbon-carbon double bond (X or X' = -C=CH₂). When the termination reaction is a chain transfer reaction, X or X' is typically an easily abstractable atom, commonly hydrogen. Thus, for instance, when the chain transfer agent is a thiol, X and/or X' can be a hydrogen atom.

As will be apparent from formula (I), m + I equals the number of polymerisable groups in L and n is the total number of repeat units in the copolymer. Preferably, m is 1 to 6, more preferably 1 to 4.

### Synthesis of the Copolymers

The copolymer is prepared by an addition polymerisation method, which is a conventional free-radical polymerisation technique using a chain transfer agent. To produce a branched polymer by a conventional radical polymerisation process, a monofunctional monomer is polymerised with a multifunctional monomer or branching agent in the presence of a chain transfer agent and free-radical initiator. The polymerisations may proceed via solution, bulk, suspension, dispersion and emulsion procedures.

Thus, the invention also provides a method of preparing a comb or graft branched copolymer as defined above by a an addition (preferably, free-radical) polymerisation process, which comprises mixing together
(a) at least one monofunctional monomer as previously defined;
(b) at least 0.05 mole% (based on the number of moles of monofunctional monomer) of a multifunctional monomer as previously defined;
(c) a chain transfer agent as previously defined; and
(d) an initiator, optionally but preferably a free-radical initiator as previously defined;
and subsequently reacting said mixture to form a branched non-crosslinked copolymer.

### Compositions

The copolymer according to the present invention may be incorporated into compositions containing only a carrier or diluent (which may comprise solid and/or liquid) or also comprising an active ingredient. The compound is typically included in said compositions at levels of from 0.01% to 50%, particularly from 0.01% to 25% by weight, preferably from 0.05% to 15%, more preferably from 0.1% to 10%, especially from 0.1% to 5% and most preferably from 0.2 % to 1.5%.

The copolymers of the invention may exhibit properties, such as viscosity reduction, increased deposition, increased particular/molecular dispersion, increased lubrication and increased solubility for a particular molecular weight when compared to a linear analogous polymer. The architecture of the polymers can also have an effect on the pKa of polyacids or bases. Thus, the copolymers of the invention may be used in a variety of applications. However, the copolymers of the invention are particularly suitable for use in laundry compositions, especially as colloid stabilising agents.

Synthetic copolymers are often used in laundry products as colloidal stabilisers. One part of the polymer binds to the colloidal particle (dirt mimic) whilst another part stabilises the particle in solution and prevents redeposition. Branched polymers of the invention have been found to increase the efficiency of colloidal stabilisation via steric mechanisms.

The active ingredient in the compositions is preferably a surface active agent or a fabric conditioning agent. More than one active ingredient may be included. For some applications a mixture of active ingredients may be used.

The compositions of the invention may be in any physical form e.g. a solid such as a powder or granules, a tablet, a solid bar, a paste, gel or liquid, especially, an aqueous based liquid. In particular the compositions may be used in laundry compositions, especially in liquid, powder or tablet laundry compositions.

The compositions of the present invention are preferably laundry compositions, especially main wash (fabric washing) compositions or rinse-added softening compositions. The main wash compositions may include a fabric softening agent and rinse-added fabric softening compositions may include surface-active compounds, particularly non-ionic surface-active compounds, if appropriate.

### The organic detergent surfactant

The detergent compositions of the invention may contain a surface-active compound (surfactant) which may be chosen from soap and non-soap anionic, cationic, non-ionic, amphoteric and zwitterionic surface-active compounds and mixtures thereof. Many suitable surface-active compounds are available and are fully described in the literature, for example, in "Surface-Active Agents and Detergents", Volumes I and II, by Schwartz, Perry and Berch.

The preferred detergent-active compounds that can be used are soaps and synthetic non-soap anionic and non-ionic compounds. The total amount of surfactant present is suitably within the range of 5 to 60 wt%, preferably from 5 to 40 wt%.

The compositions of the invention may contain anionic surfactants. Examples include alkylbenzene sulfonates, such as linear alkylbenzene sulfonate, particularly linear alkylbenzene sulfonates having an alkyl chain length of C8-C15. It is preferred that the level of linear alkylbenzene sulfonate is from 0 wt% to 30 wt%, more preferably 1 wt% to 25 wt%, most preferably from 2 wt% to 15 wt%.

The compositions of the invention may contain other anionic surfactants in amounts additional to the percentages quoted above. Suitable anionic surfactants are well-known to those skilled in the art. Examples include primary and secondary alkyl sulfates, particularly C8-C20 primary alkyl sulfates; alkyl ether sulfates; olefin sulfonates; alkyl xylene sulfonates; dialkyl sulfosuccinates; and fatty acid ester sulfonates. Sodium salts are generally preferred.

The compositions of the invention may also contain non-ionic surfactant. Nonionic surfactants that may be used include the primary and secondary alcohol ethoxylates, especially the C8-C20 aliphatic alcohols ethoxylated with an average of from 1 to 20 moles of ethylene oxide per mole of alcohol, and more especially the C10-C15 primary and secondary aliphatic alcohols ethoxylated with an average of from 1 to 10 moles of ethylene oxide per mole of alcohol. Non-ethoxylated nonionic surfactants include alkylpolyglycosides, glycerol monoethers, and polyhydroxyamides (glucamide).

It is preferred that the level of non-ionic surfactant is from 0 wt% to 30 wt%, preferably from 1 wt% to 25 wt%, most preferably from 2 wt% to 15 wt%.

It is also possible to include certain mono-alkyl cationic surfactants which can be used in main-wash compositions for fabrics. Cationic surfactants that may be used include quaternary ammonium salts of the general formula R¹R²R³R⁴N⁺ X⁻ wherein the R groups are long or short hydrocarbon chains, typically alkyl, hydroxyalkyl or ethoxylated alkyl groups, and X is a counter-ion (for example, compounds in which R¹ is a C8-C22 alkyl group, preferably a C8-C10 or C12-C14 alkyl group, R² is a methyl group, and R³ and R⁴, which may be the same or different, are methyl or hydroxyethyl groups); and cationic esters (for example, choline esters).

Amphoteric and zwitterionic surfactants that may be used include alkyl amine oxides, betaines and sulfobetaines. In accordance with the present invention, the detergent surfactant (a) most preferably comprises an anionic sulfonate or sulfonate surfactant optionally in admixture with one or more cosurfactants selected from ethoxylated nonionic surfactants, non-ethoxylated nonionic surfactants, ethoxylated sulfate anionic surfactants, cationic surfactants, amine oxides, alkanolamides and combinations thereof.

The choice of surface-active compound (surfactant), and the amount present, will depend on the intended use of the detergent composition. In fabric washing compositions, different surfactant systems may be chosen, as is well known to the skilled formulator, for handwashing products and for products intended for use in different types of washing machine.

The total amount of surfactant present will also depend on the intended end use and may be as high as 60 wt%, for example, in a composition for washing fabrics by hand. In compositions for machine washing of fabrics, an amount of from 5 to 40 wt% is generally appropriate. Typically the compositions will comprise at least 2 wt% surfactant e.g. 2-60%, preferably 15-40% most preferably 25-35%.

Detergent compositions suitable for use in most automatic fabric washing machines generally contain anionic non-soap surfactant, or non-ionic surfactant, or combinations of the two in any suitable ratio, optionally together with soap.

Any conventional fabric conditioning agent may be used in the compositions of the present invention. The conditioning agents may be cationic or non-ionic. If the fabric conditioning compound is to be employed in a main wash detergent composition the compound will typically be non-ionic. For use in the rinse phase, typically they will be cationic. They may for example be used in amounts from 0.5% to 35%, preferably from 1% to 30% more preferably from 3% to 25% by weight of the composition.

Preferably the fabric conditioning agent(s) have two long chain alkyl or alkenyl chains each having an average chain length greater than or equal to C16. Most preferably at least 50% of the long chain alkyl or alkenyl groups have a chain length of C18 or above. It is preferred that the long chain alkyl or alkenyl groups of the fabric conditioning agents are predominantly linear.

The fabric conditioning agents are preferably compounds that provide excellent softening, and are characterised by a chain melting Lβ to Lα transition temperature greater than 250C, preferably greater than 350C, most preferably greater than 450C. This Lβ to Lα transition can be measured by DSC as defined in " Handbook of Lipid Bilayers, D Marsh, CRC Press, Boca Raton, Florida, 1990 (pages 137 and 337). Substantially insoluble fabric conditioning compounds in the context of this invention are defined as fabric conditioning compounds having a solubility less than 1 x 10-3 wt % in demineralised water at 20°C. Preferably the fabric softening compounds have a solubility less than 1x10⁻⁴ wt%, most preferably less than 1x10⁻⁸ to 1x10⁻⁶. Preferred cationic fabric softening agents comprise a substantially water insoluble quaternary ammonium material comprising a single alkyl or alkenyl long chain having an average chain length greater than or equal to C20 or, more preferably, a compound comprising a polar head group and two alkyl or alkenyl chains having an average chain length greater than or equal to C14.

Preferably, the cationic fabric softening agent is a quaternary ammonium material or a quaternary ammonium material containing at least one ester group. The quaternary ammonium compounds containing at least one ester group are referred to herein as ester-linked quaternary ammonium compounds.

As used in the context of the quarternary ammonium cationic fabric softening agents, the term 'ester group', includes an ester group which is a linking group in the molecule.

It is preferred for the ester-linked quaternary ammonium compounds to contain two or more ester groups. In both monoester and the diester quaternary ammonium compounds it is preferred if the ester group(s) is a linking group between the nitrogen atom and an alkyl group. The ester groups(s) are preferably attached to the nitrogen atom via another hydrocarbyl group.

Also preferred are quaternary ammonium compounds containing at least one ester group, preferably two, wherein at least one higher molecular weight group containing at least one ester group and two or three lower molecular weight groups are linked to a common nitrogen atom to produce a cation and wherein the electrically balancing anion is a halide, acetate or lower alkosulphate ion, such as chloride or methosulphate. The higher molecular weight substituent on the nitrogen is preferably a higher alkyl group, containing 12 to 28, preferably 12 to 22, e.g. 12 to 20 carbon atoms, such as coco-alkyl, tallowalkyl, hydrogenated tallowalkyl or substituted higher alkyl, and the lower molecular weight substituents are preferably lower alkyl of 1 to 4 carbon atoms, such as methyl or ethyl, or substituted lower alkyl. One or more of the said lower molecular weight substituents may include an aryl moiety or may be replaced by an aryl, such as benzyl, phenyl or other suitable substituents.

Preferably the quaternary ammonium material is a compound having two C12-C22 alkyl or alkenyl groups connected to a quaternary ammonium head group via at least one ester link, preferably two ester links or a compound comprising a single long chain with an average chain length equal to or greater than C20.

More preferably, the quaternary ammonium material comprises a compound having two long chain alkyl or alkenyl chains with an average chain length equal to or greater than C14. Even more preferably each chain has an average chain length equal to or greater than C16. Most preferably at least 50% of each long chain alkyl or alkenyl group has a chain length of C18. It is preferred if the long chain alkyl or alkenyl groups are predominantly linear.

The most preferred type of ester-linked quaternary ammonium material that can be used in laundry rinse compositions according to the invention is represented by the formula (A) : 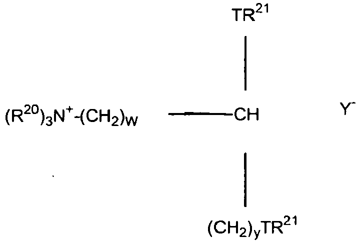 wherein T is 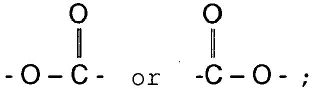 each R²⁰ group is independently selected from C₁₋₄ alkyl, hydroxyalkyl or C₂₋₄ alkenyl groups; and wherein each R²¹ group is independently selected from C₈₋₂₈ alkyl or alkenyl groups; Y⁻ is any suitable counter-ion, i.e. a halide, acetate or lower alkosulfate ion, such as chloride or methosulfate; w is an integer from 1-5 or is 0; and y is an integer from 1-5. It is especially preferred that each R²⁰ group is methyl and w is 1 or 2.

It is advantageous for environmental reasons if the quaternary ammonium material is biologically degradable.

Preferred materials of this class such as 1,2 bis[hardened tallowoyloxy]-3-trimethylammonium propane chloride and their method of preparation are, for example, described in US-A-4 137 180. Preferably these materials comprise small amounts of the corresponding monoester as described in US-A-4 137 180 for example 1-hardened tallowoyloxy-2-hydroxy-3-trimethylammonium propane chloride.

Another class of preferred ester-linked quaternary ammonium materials for use in laundry rinse compositions according to the invention can be represented by the formula: 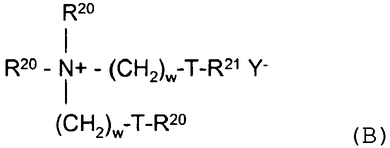 wherein T is 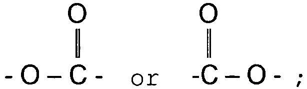 and wherein R²⁰, R²¹, w, and Y - are as defined above.

Of the compounds of formula (B), di-(tallowyloxyethyl)-dimethyl ammonium chloride, available from Hoechst, is the most preferred. Di-(hardened tallowyloxyethyl)dimethyl ammonium chloride, ex Hoechst and di-(tallowyloxyethyl)-methyl hydroxyethyl methosulphate are also preferred.

Another preferred class of quaternary ammonium cationic fabric softening agent is defined by formula (C):- 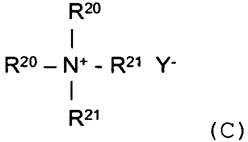 where R²⁰, R²¹ and Y⁻ are as hereinbefore defined.

A preferred material of formula (C) is di-hardened tallow-diethyl ammonium chloride, sold under the Trademark Arquad 2HT.

The optionally ester-linked quaternary ammonium material may contain optional additional components, as known in the art, in particular, low molecular weight solvents, for instance isopropanol and/or ethanol, and co-actives such as nonionic softeners, for example fatty acid or sorbitan esters.

### The detergency builder

The compositions of the invention, when used as main wash fabric washing compositions, will generally also contain one or more detergency builder. The total amount of detergency builder in the compositions will typically range from 0 to 80 wt%, preferably from 0 to 60 wt%.

Inorganic builders that may be present include sodium carbonate, if desired in combination with a crystallisation seed for calcium carbonate, as disclosed in GB 1 437 950 (Unilever); crystalline and amorphous aluminosilicates, for example, zeolites as disclosed in GB 1 473 201 (Henkel), amorphous aluminosilicates as disclosed in GB 1 473 202 (Henkel) and mixed crystalline/amorphous aluminosilicates as disclosed in GB 1 470 250 (Procter & Gamble); and layered silicates as disclosed in EP 164 514B (Hoechst). Inorganic phosphate builders, for example, sodium orthophosphate, pyrophosphate and tripolyphosphate are also suitable for use with this invention.

The compositions of the invention preferably contain an alkali metal, preferably sodium, aluminosilicate builder. Sodium aluminosilicates may generally be incorporated in amounts of from 5 to 60% by weight (anhydrous basis), preferably from 10 to 50 wt%, especially from 25 to 50 wt%.

The alkali metal aluminosilicate may be either crystalline or amorphous or mixtures thereof, having the general formula: 0.8-1.5 Na₂O. Al₂O₃. 0.8-6 SiO₂

These materials contain some bound water and are required to have a calcium ion exchange capacity of at least 50 mg CaO/g. The preferred sodium aluminosilicates contain 1.5-3.5 SiO₂ units (in the formula above). Both the amorphous and the crystalline materials can be prepared readily by reaction between sodium silicate and sodium aluminate, as amply described in the literature. Suitable crystalline sodium aluminosilicate ion-exchange detergency builders are described, for example, in GB 1 429 143 (Procter & Gamble). The preferred sodium aluminosilicates of this type are the well-known commercially available zeolites A and X, and mixtures thereof.

The zeolite may be the commercially available zeolite 4A now widely used in laundry detergent powders. In an alternative embodiment of the invention, the zeolite builder incorporated in the compositions of the invention is maximum aluminium zeolite P (zeolite MAP) as described and claimed in EP 384 070A (Unilever). Zeolite MAP is defined as an alkali metal aluminosilicate of the zeolite P type having a silicon to aluminium ratio not exceeding 1.33, preferably within the range of from 0.90 to 1.33, and more preferably within the range of from 0.90 to 1.20.

In the case of zeolite MAP, zeolite MAP having a silicon to aluminium ratio not exceeding 1.07, more preferably about 1.00, is especially preferred. The calcium binding capacity of zeolite MAP is generally at least 150 mg CaO per g of anhydrous material.

The zeolites may be supplemented by other inorganic builders, for example, amorphous aluminosilicates, or layered silicates such as SKS-6 ex Clariant.

The zeolite may be supplemented by organic builders. Organic builders that may be present include polycarboxylate polymers such as polyacrylates, acrylic/maleic copolymers, and acrylic phosphinates; monomeric polycarboxylates such as citrates, gluconates, oxydisuccinates, glycerol mono-, di and trisuccinates, carboxymethyloxy succinates, carboxymethyloxymalonates, dipicolinates, hydroxyethyliminodiacetates, alkyl- and alkenylmalonates and succinates; and sulfonated fatty acid salts. This list is not intended to be exhaustive.

Especially preferred organic builders are citrates, suitably used in amounts of from 1 to 30 wt%, preferably from 5 to 30 wt%, more preferably from 10 to 25 wt%; and acrylic polymers, more especially acrylic/maleic copolymers, suitably used in amounts of from 0.5 to 15 wt%, preferably from 1 to 10 wt%.

Builders, both inorganic and organic, are preferably present in alkali metal salt, especially sodium salt, form.

Builders are suitably present in total amounts of from 10 to 80 wt%, more preferably from 20 to 60 wt%. Builders may be inorganic or organic.

A built composition in accordance with the invention may most preferably comprise from 10 to 80 wt% of a detergency builder (b) selected from zeolites, phosphates, and citrates.

### Other detergent ingredients

The laundry detergent composition will generally comprises other detergent ingredients well known in the art. These may suitably be selected from bleach ingredients, enzymes, sodium carbonate, sodium silicate, sodium sulphate, foam controllers, foam boosters, perfumes, fabric conditioners, soil release polymers, dye transfer inhibitors, photobleaches, fluorescers and coloured speckles.

Compositions according to the invention may also suitably contain a bleach system. Fabric washing compositions may desirably contain peroxy bleach compounds, for example, inorganic persalts or organic peroxyacids, capable of yielding hydrogen peroxide in aqueous solution.

Suitable peroxy bleach compounds include organic peroxides such as urea peroxide, and inorganic persalts such as the alkali metal perborates, percarbonates, perphosphates, persilicates and persulfates. Preferred inorganic persalts are sodium perborate monohydrate and tetrahydrate, and sodium percarbonate.

Especially preferred is sodium percarbonate having a protective coating against destabilisation by moisture. Sodium percarbonate having a protective coating comprising sodium metaborate and sodium silicate is disclosed in GB 2 123 044B (Kao).

The peroxy bleach compound is suitably present in an amount of from 0.1 to 35 wt%, preferably from 0.5 to 25 wt%. The peroxy bleach compound may be used in conjunction with a bleach activator (bleach precursor) to improve bleaching action at low wash temperatures. The bleach precursor is suitably present in an amount of from 0.1 to 8 wt%, preferably from 0.5 to 5 wt%.

Preferred bleach precursors are peroxycarboxylic acid precursors, more especially peracetic acid precursors and pernonanoic acid precursors. Especially preferred bleach precursors suitable for use in the present invention are N,N,N',N',-tetracetyl ethylenediamine (TAED) and sodium nonanoyloxybenzene sulphonate (SNOBS). The novel quaternary ammonium and phosphonium bleach precursors disclosed in US 4 751 015 and US 4 818 426 (Lever Brothers Company) and EP 402 971A (Unilever), and the cationic bleach precursors disclosed in EP 284 292A and EP 303 520A (Kao) are also of interest.

The bleach system can be either supplemented with or replaced by a peroxyacid. examples of such peracids can be found in US 4 686 063 and US 5 397 501 (Unilever). A preferred example is the imido peroxycarboxylic class of peracids described in EP A 325 288, EP A 349 940, DE 382 3172 and EP 325 289. A particularly preferred example is phthalimido peroxy caproic acid (PAP). Such peracids are suitably present at 0.1 - 12%, preferably 0.5 - 10%.

A bleach stabiliser (transition metal sequestrant) may also be present. Suitable bleach stabilisers include ethylenediamine tetra-acetate (EDTA), diethylenetriamine pentaacetate (DTPA), the polyphosphonates such as Dequest (Trade Mark), ethylenediamine tetramethylene phosphonate (EDTMP) and diethylenetriamine pentamethylene phosphate (DETPMP) and non-phosphate stabilisers such as EDDS (ethylene diamine disuccinate). These bleach stabilisers are also useful for stain removal especially in products containing low levels of bleaching species or no bleaching species.

An especially preferred bleach system comprises a peroxy bleach compound (preferably sodium percarbonate optionally together with a bleach activator), and a transition metal bleach catalyst as described and claimed in EP 458 397A ,EP. 458 398A and EP 509 787A (Unilever).

The compositions according to the invention may also contain one or more enzyme(s). Suitable enzymes include the proteases, amylases, cellulases, oxidases, peroxidases and lipases usable for incorporation in detergent compositions. Preferred proteolytic enzymes (proteases) are, catalytically active protein materials which degrade or alter protein types of stains when present as in fabric stains in a hydrolysis reaction. They may be of any suitable origin, such as vegetable, animal, bacterial or yeast origin.

Proteolytic enzymes or proteases of various qualities and origins and having activity in various pH ranges of from 4-12 are available and can be used in the instant invention. Examples of suitable proteolytic enzymes are the subtilins which are obtained from particular strains of *B*. *Subtilis* and *B*. *licheniformis,* such as the commercially available subtilisins Maxatase (Trade Mark), as supplied by Gist Brocades N.V., Delft, Holland, and Alcalase (Trade Mark), as supplied by Novo Industri A/S, Copenhagen, Denmark.

Particularly suitable is a protease obtained from a strain of Bacillus having maximum activity throughout the pH range of 8-12, being commercially available, e.g. from Novo Industri A/S under the registered trade-names Esperase (Trade Mark) and Savinase (Trade-Mark). The preparation of these and analogous enzymes is described in GB 1 243 785. Other commercial proteases are Kazusase (Trade Mark obtainable from Showa-Denko of Japan), Optimase (Trade Mark from Miles Kali-Chemie, Hannover, West Germany), and Superase (Trade Mark obtainable from Pfizer of U.S.A.).

Detergency enzymes are commonly employed in granular form in amounts of from about 0.1 to about 3.0 wt%. However, any suitable physical form of enzyme may be used.

The compositions of the invention may contain alkali metal, preferably sodium, carbonate, in order to increase detergency and ease processing. Sodium carbonate may suitably be present in amounts ranging from 1 to 60 wt%, preferably from 2 to 40 wt%. However, compositions containing little or no sodium carbonate are also within the scope of the invention.

Powder flow may be improved by the incorporation of a small amount of a powder structurant, for example, a fatty acid (or fatty acid soap), a sugar, an acrylate or acrylate/maleate copolymer, or sodium silicate. One preferred powder structurant is fatty acid soap, suitably present in an amount of from 1 to 5 wt%. The amount of sodium silicate may suitably range from 0.1 to 5 wt%.

Other materials that may be present in detergent compositions of the invention include sodium silicate; antiredeposition agents such as cellulosic polymers; soil release polymers; inorganic salts such as sodium sulfate; lather control agents or lather boosters as appropriate; proteolytic and lipolytic enzymes; dyes; coloured speckles; perfumes; foam controllers; fluorescers and decoupling polymers. This list is not intended to be exhaustive. However, many of these ingredients will be better delivered as benefit agent groups in materials according to the first aspect of the invention.

In a particularly preferred laundry cleaning composition, the composition comprises
(a) from 5 to 60 wt% of an organic detergent surfactant selected from anionic, nonanionic, cationic, zwitterionic and amphoteric surfactants and combinations thereof,
(b) from 0 to 80 wt% of a detergent builder,
(c) from 0.1 to 10 wt% of the comb or graft branched copolymer, and
(d) optionally other detergent ingredients to 100 wt%.

The detergent composition when diluted in the wash liquor (during a typical wash cycle) will typically give a pH of the wash liquor from 7 to 10.5 for a main wash detergent.

### Preparation of particulate detergent composition

Particulate detergent compositions are suitably prepared by spray-drying a slurry of compatible heat-insensitive ingredients, and then spraying on or post-dosing those ingredients unsuitable for processing via the slurry. The skilled detergent formulator will have no difficulty in deciding which ingredients should be included in the slurry and which should not.

Particulate detergent compositions of the invention preferably have a bulk density of at least 400 g/litre, more preferably at least 500 g/litre. Especially preferred compositions have bulk densities of at least 650 g/litre, more preferably at least 700 g/litre.

Such powders may be prepared either by post-tower densification of spray-dried powder, or by wholly non-tower methods such as dry mixing and granulation; in both cases a high-speed mixer/granulator may advantageously be used. Processes using high-speed mixer/granulators are disclosed, for example, in EP 340 013A, EP 367 339A, EP 390 251A and EP 420 317A (Unilever).

Liquid detergent compositions can be prepared by admixing the essential and optional ingredients thereof in any desired order to provide compositions containing components in the requisite concentrations. Liquid compositions according to the present invention can also be in compact form which means it will contain a lower level of water compared to a conventional liquid detergent.

The present invention will now be explained in more detail by reference to the following non-limiting examples:-

### Examples

In the following examples, copolymers are described using the following nomenclature:-
(MonomerG)_{g} (Monomer J)ⱼ (Brancher L)ₗ (Chain Transfer Agent)_{d}
where the values in subscript are the molar ratios of each constituent normalised to give the monofunctional monomer values as 100, i.e. g + j = 100. The degree of branching or branching level is denoted by 1 and d refers to the molar ratio of the chain transfer agent.

### For example:

Methacrylic acid₁₀₀ Ethyleneglycol dimethacrylate₁₅ Dodecane thiol₁₅ would describe a polymer containing methacrylic acid : ethyleneglycol dimethacrylate : dodecane thiol at a molar ratio of 100:15:15.

Molecular weight determination was performed by GPC using SEC-MALLs on a Wyatt chromatograph with either tetrahydrofuran (THF) or 20% aqueous methanol with 0.05M NaNO₃ adjusted to pH 9 as the organic or aqueous eluants respectively, at a flow rate of 1 ml per minute and a sample injection volume of 100 µl. The instrument was fitted with a Polymer Laboratories PL mixed C and mixed D column set at 40°C. Detection was carried out using a Wyatt Dawn DSP laser photometer with a Jasco RI detector.

### Example 1

### Branched poly[methacrylic acid-co-poly(ethyleneglycol)₂₂ monomethacrylate-co-ethyleneglycol dimethacrylate]

### MAA₉₅/ (PEG₂₂MA) ₅ EGDMA₁₀DDT₁₀

### Methacrylic acid (MAA) (8.000 g, 93 mmol),

poly (ethyleneglycol)₂₂monomethacrylate (PEG₂₂MA) (4.651 g, 4.7 mmol), ethyleneglycol dimethacrylate (EGDMA) (1.933 g, 9.8 mmol) and dodecanethiol (DDT) (2.32 cm³, 9.8 mmol) were dissolved in ethanol (126 cm³) and degassed by nitrogen purge for 30 minutes. After this time the reaction vessel was subjected to a positive nitrogen flow and heated at 60 °C. Once the temperature had equilibrated, AIBN (146 mg, 1 wt. % based on total monomer) was added to start the polymerisation and was left stirring for 18 hours. The polymers were purified by precipitation into cold petroleum. The supernatant was decanted off and the polymer washed several times with cold petroleum. The polymer was dried for 48 hours in a vacuum oven to yield a white solid in 80 % yield.

### Examples 2

### Branched poly[diethylaminoethyl methacrylate -co-poly(ethyleneglycol)₂₂ monomethacrylate-co-ethyleneglycol dimethacrylate]

### DEA₉₅/ (PEG₂₂MA)₅EGDMA₁₀DDT₁₀

Diethylaminoethyl methacrylate (DEA) (8.000 g, 43 mmol), PEG₂₂MA (2.162 g, 2.2 mmol), EGDMA (0.900 g, 4.5 mmol) and dodecanethiol (1.08 cm³, 4.5 mmol) were dissolved in ethanol (100 cm³) and degassed by nitrogen purge for 30 minutes. After this time the reaction vessel was subjected to a positive nitrogen flow and heated at 60 °C. Once the temperature had equilibrated, AIBN (110 mg, 1 wt.% based on total monomer) was added to start the polymerisation and was left stirring for 18 hours. Ethanol was removed by vacuum distillation and the resulting clear, oily polymers were washed with very cold petroleum. The polymer was dried for 48 hours in a vacuum oven to give a viscous polymer in 85 % yield.
GPC
Mn: 4600; Mw: 8100; Eluant: THF

### Example 3

### Branched poly[N-vinylpyrrolidone-co-vinyl imidazole-co-poly(ethyleneglycol)₂₂ monomethacrylate-co-ethyleneglycol dimethacrylate]

### VP₅₉/VI₃₁/ (PEG₂₂MA)₁₀ EGDMA₁₀DDT₁₀

N-Vinylpyrrolidinone (VP) (2.500 g, 22.5 mmol), vinyl imidazole (VI) (1.112 g, 11.8 mmol), PEG₂₂MA (3.817 g, 3.8 mmol), EGDMA (0.756 g, 3.8 mmol) and dodecanethiol (0.912 cm³, 3.8 mmol) were dissolved in ethanol (75 cm³) and degassed by nitrogen purge for 30 minutes. After this time the reaction vessel was subjected to a positive nitrogen flow and heated at 60 °C. Once the temperature had equilibrated, AIBN (93 mg, 1 wt. % based on total monomer) was added to start the polymerisation and was left stirring for 18 hours. The polymerisation mixture was concentrated by vacuum distillation and the resulting solution was precipitated in cold petroleum ether and then washed several times with cold ether. The polymer was dried for 48 hours in a vacuum oven to give a pale yellow solid in 90 % yield.

### Example 4

### Branched poly[monomethacryloxypropyl-terminated poly(dimethylsiloxane)-co-tetraethyleneglycol diacrylate]

### PDMSMA₁₀₀TEGDA₁₇DDT₁₇

Monomethacryloxypropyl-terminated polydimethylsiloxane (PDMSMA) (1,000 Mwt, 6.75 g, 6.75 mmol), tetraethyleneglycol diacrylate (TEGDA) (0.225 g, 1.125 mmol), dodecanethiol (0.223 g, 1.125 mmol) and AIBN (0.7 g) were dissolved in anhydrous THF (50 cm³) and degassed by bubbling nitrogen through the solutions for 30 minutes, the solution was then sealed. The solution was then heated with stirring to 70°C for 18 hours then allowed to cool. The solvent was then removed under reduced pressure and the viscous solution washed with acetone thrice (10 cm³) and finally dried under reduced pressure to give a clear viscous oil (5.2 g).

### Example 5

### Branched copolymers as efficient colloid stabilising agents

Six copolymers, comprising one linear and 5 branched, were synthesised and assessed for the stabilisation of kaolin (clay). The theoretical compositions were:
DEA₉₅/ (PEG₂₂MA)₅ (Comparative Example - Linear copolymer), DEA₉₅/(PEG₂₂MA)₅EGDMA_{2.5}DDT_{2.5} (Branched copolymer), DEA₉₅/ (PEG₂₂MA)₅EGDMA₅DDT₅ (Branched copolymer), DEA₉₅/(PEG₂₂MA)₅EGDMA_{7.5}DDT_{7.5} (Branched copolymer), DEA₉₅/(PEG₂₂MA)₅EGDMA₁₀DDT₁₀ (Branched copolymer), DEA₉₅/(PEG₂₂MA)₅EGDMA₁₅DDT₁₅ (Branched copolymer),
where PEGMA is poly(ethyleneglycol) methacrylate (Mn=1000 g.mol⁻¹) and DEA is diethylaminoethyl methacrylate as the monofunctional monomers. DDT is dodecanethiol, the chain transfer agent. The numbers in subscript refer to the relative molar compositions of the components in the polymer feed.

Each of the polymers were tested for stability of kaolin particles at pH 4, 20 °C at a final concentration of 120 ppm, using 2g/L particles. In each case the stability of the particles was determined by optical density measurements at a constant wavelength (450 nm) and was compared to the stability of the particles in the absence of any polymer, as shown in Table 1. The stability of the colloidal particles in the absence of polymer was given the nominal colloidal stability of 100 %. In all cases, the presence of polymer increased the colloidal stability. However, the stability of the colloidal particles was significantly higher for the branched polymers compared to linear polymers. Interestingly, the degree of branching seemed to have negligible effect on the colloid stability. In essence, these branched polymers are more effective colloidal stabilisers. However, highly branched polymers show negligible improvements in stability over lightly branched analogues.

**Table 1. Tabulated data for the effect of polymer architecture (degree of branching, i.e. 1) at a concentration of 120 ppm on the colloidal stability of kaolin particles (2g/L).**

| Polymer architecture (degree of branching) | none (control) | Linear (1=0) | 1=2.5 | 1=5 | 1=7.5 | 1=10 | 1=15 |
|---|---|---|---|---|---|---|---|
| Normalised colloid stability / % | 100 | 184 | 342 | 363 | 389 | 383 | 376 |

### Example 6

### Branched Poly [dimethylaminoethyl methacrylate-co-poly(ethyleneglycol)₁₈₁-dimethacrylate].

### DMAEMA₁₀₀ (PEG₁₈₁DMA) ₁₅TG₁₅.

Dimethylaminoethyl methacrylate (DMAEMA) (1.000 g, 64.6 mmol), poly(ethyleneglycol)dimethacrylate (PEG₁₈₁DMA) (7.733 g, 0.95 mmol) and thioglycerol (TG) (0.083 cm³, 9.7 mmol) were dissolved in tetrahydrofuran (100 cm³) and degassed by nitrogen purge for 30 minutes. After this time the reaction vessel was subjected to a positive nitrogen flow and heated under reflux at 70 °C. Once the temperature had equilibrated, AIBN (88 mg, 1 wt. % based on total monomer) was added to start the polymerisation and was left stirring for 40 hours. The polymerisation solution was concentrated by vacuum distillation and the resulting clear, viscous solution was precipitated in cold petroleum. This was washed several times with cold petroleum and then dried for 48 hours in a vacuum oven. The polymer was obtained as an off white solid in 90 % yield.
GPC: Mn: 29800; Mw: 85900; Eluant: THF

### Example 7

### Branched poly[poly(ethyleneglycol)₂₂monomethacrylate-co-poly(dimethyl - siloxane{5k})dimethacrylate]

### [PEG₂₂MA]₁₀₀[PDMS (5k) DMA] ₁₅DDT₁₅

Polyethyleneglycol monomethyl ether monomethacrylate (10.0 g, 10.0 mmol), methacryloxypropyl-terminated polydimethylsiloxane (PDMS(5k)MA; M_{w} 5000) (7.5 g, 1.5 mmol) and dodecanethiol (DDT) ( 303 mg, 1.5 mmol) were dissolved in toluene (75 cm³). AIBN (87 mg, 0.5 wt% of monomers) was added and the solution sparged with nitrogen for 30 minutes in order to remove dissolved oxygen. The flask was then fitted with a condenser and the system flushed with nitrogen and sealed under the inert atmosphere. The reaction was heated (under N₂) to 80 °C for 40 hours overnight. The flask was allowed to cool before the solvent was evaporated to leave the desired polymer as a waxy white solid (17.3 g, 99 %). Residual solvent was removed by pumping down (to 0.5 mBar) on a vacuum line. The material was soluble in water (translucent solution) and organic solvents such as chloroform and THF.
GPC: Mn: 7300; Mw: 11200; Eluant: THF

## Claims

1. A branched polymer obtainable by an addition polymerisation process, which is the reaction product of:
(a) an initiator,
(b) a compatible chain transfer agent (E and E'),
(c) at least one ethyleneically monounsaturated monomer (G and/or J),
(d) at least one ethyleneically polyunsaturated monomer (L),
wherein at least one of (a)-(d) has a molecular weight of at least 1000 Daltons, and the mole ratio of (d) to (c) is greater than 0.0005 to 1 and
having the general formula 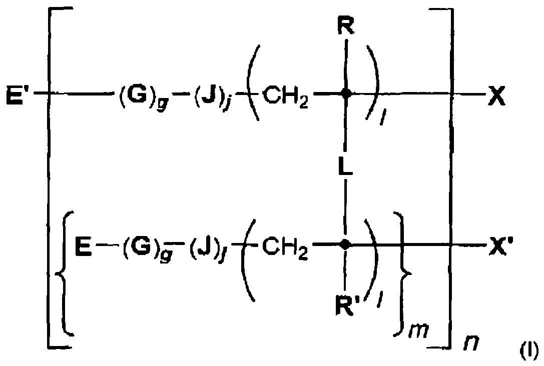 in which
E and E' each independently represent a residue of a chain transfer agent or an initiator;
G and J each independently represent a residue of a monofunctional monomer having one polymerisable double bond per molecule;
L is a residue of a multifunctional monomer having at least two polymerisable double bonds per molecule;
R and R' each independently represent a hydrogen atom or an optionally substituted alkyl group;
X and X' each independently represent a terminal group derived from a termination reaction;
g, j and l represent the molar ratio of each residue normalised so that g + j = 100, wherein g and each independently represent 0 to 100, and l is ≥ 0.05 ; and
m and n are each independently ≥ 1; and
at least one of E, E', G, J, and L has a molecular weight of at least 1000 Daltons and in which the residue of the chain transfer agent comprises 0.05 to 30 mole% based on the number of moles of the monofunctional monomer, of the copolymer and in which the chain transfer agent is selected from monofunctional and multifunctional thiols and catalytic chain transfer agents.

2. A copolymer according to claim 1 in which the polymer is a comb or graft branched polymer, and at least one of G and J has a molecular weight of at least 1000 Daltons, and L has a molecular weight of 1000 Daltons or less.

3. A copolymer according to claim 2, in which the other of G and J, if present, has a molecular weight of 1000 Daltons or less.

4. A copolymer according to claim 2 or 3 in which the monofunctional monomer having a molecular weight of at least 1000 Daltons is a hydrophilic monomer and in which the chain transfer agent has a molecular weight of 1000 Daltons or less.

5. A copolymer according to claim 1 in which the polymer is a branched internal block copolymer, and G and J have a molecular weight of 1000 Daltons or less, and L has a molecular weight of at least 1000 Daltons and in which the chain transfer agent has a molecular weight of 1000 Daltons or less.

6. A copolymer according to claim 1 in which the polymer is a branched external block copolymer, and the chain transfer agent has a molecular weight of at least 1000 Daltons, and G, J, and L have a molecular weight of 1000 Daltons or less.

7. A copolymer according to claim 1 in which the polymer is a branched graft-block copolymer, and G, J, and L have a molecular weight of at least 1000 Daltons and in which the chain transfer agent has a molecular weight of at least 1000 Daltons.

8. A copolymer according to any of the preceding claims, in which G and J each independently represent a residue of a monofunctional monomer selected from vinyl acids, vinyl acid esters, vinyl aryl compounds, vinyl acid anhydrides, vinyl amides, vinyl ethers, vinyl amines, vinyl aryl amines, vinyl nitriles, vinyl ketones, and derivatives thereof; hydroxyl-containing monomers and monomers which can be post-reacted to form hydroxyl groups; acid-containing or acid functional monomers; zwitterionic monomers; quaternised amino monomers, polymeric monomers; and corresponding allyl monomers of the aforesaid vinyl monomers.

9. A copolymer according to any one of the preceding claims in which I is 0.05 to 50, preferably 0.05 to 40, more preferably 0.05 to 30 and especially 0.05 to 15.

10. A copolymer according to any one of the preceding claims, in which L is a residue of a multifunctional monomer selected from di- or multivinyl esters, di- or multivinyl amides, di- or multivinyl aryl compounds and di- or multivinyl alklaryl ethers.

11. A copolymer according to any one of the preceding claims, in which the residue of the initiator comprises 0.01 to 5% w/w, preferably 0.01 to 3% w/w, of the copolymer based on the total weight of the monomers and in which the initiator is selected from azo-containing molecules, persulphates, redox initiators, peroxides, benzyl ketone and iniferters.

12. A method of preparing a branched copolymer according to any one of the preceding claims by an addition polymerisation process, which comprises mixing together
(a) at least one monofunctional monomer;
(b) at least 0.05 mole% (based on the number of moles of monofunctional monomer) of a multifunctional monomer;
(c) a chain transfer agent; and
(d) an initiator; and subsequently reacting said mixture to form a branched copolymer.

13. A composition comprising a branched copolymer according to any one of claims 1 to 11 and a carrier.

14. Use of a branched copolymer according to any one of claims 1 to 11 as a constituent of a laundry composition and/or as a colloid stabilising agent.

## Patentansprüche

1. Verzweigtes Polymer, welches durch einen Additionspolymerisationsprozess gewonnen werden kann und welches das Reaktionsprodukt ist von:
(a) einem Initiator,
(b) einem kompatiblen Kettenübertragungsmittel (E und E'),
(c) mindestens einem ethylenisch einfach ungesättigten Monomer (G und/oder J),
(d) mindestens einem ethylenisch mehrfach ungesättigten Monomer (L), wobei mindestens eines von (a) bis (d) eine relative Molekülmasse von mindestens 1000 Dalton aufweist, und das Molverhältnis von (d) zu (c) größer als 0,0005 zu 1 ist, und
die folgende allgemeine Formel aufweist: 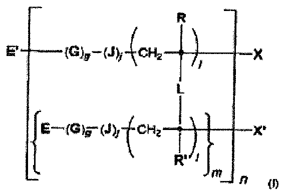 wobei
E und E' jeweils unabhängig einen Rest eines Kettenübertragungsmittels oder eines Initiators darstellen;
G und J jeweils unabhängig einen Rest eines monofunktionellen Monomers mit einerpolymerisierbaren Doppelbindung pro Molekül darstellen;
L ein Rest eines monofunktionellen Monomers mit mindestens zwei polymerisierbaren Doppelbindungen pro Molekül ist;
R und R' jeweils unabhängig ein Wasserstoffatom oder eine gegebenenfalls substituierte Alkylgruppe darstellen;
X und X' jeweils unabhängig eine endständige Gruppe darstellen, die von einer Abbruchreaktion stammt;
g, j und l das Molverhältnis jedes Restes so normiert darstellen, dass g + j = 100, wobei g und j jeweils unabhängig 0 bis 100 darstellen, und l ≥ 0,05 ist; und
m und n jeweils unabhängig ≥ 1 sind; und
mindestens eines von E, E', G, J und L eine relative Molekülmasse von mindestens 1000 Dalton aufweist, und wobei der der Rest des Kettenübertragungsmittels 0,05 bis 30 Mol-% des Copolymers bezogen auf die Gesamt-Molzahl des monofunktionellen Momomers umfasst, und wobei das Kettenübertragungsmittel aus monofunktionellen und multifunktionellen Thiolen und katalytischen Kettenübertragungsmitteln ausgewählt ist.

2. Copolymer nach Anspruch 1, wobei das Polymer ein verzweigtes Kamm- oder Pfropfpolymer ist, und mindestens eines von G und J eine relative Molekülmasse von mindestens 1000 Dalton aufweist, und L eine relative Molekülmasse von 1000 Dalton oder weniger aufweist.

3. Copolymer nach Anspruch 2, wobei das andere von G und J, falls vorhanden, eine relative Molekülmasse von 1000 Dalton oder weniger aufweist.

4. Copolymer nach Anspruch 2 oder 3, wobei das monofunktionelle Monomer mit einer relativen Molekülmasse von mindestens 1000 Dalton ein hydrophiles Monomer ist, und wobei das Kettenübertragungsmittel eine relative Molekülmasse von 1000 Dalton oder weniger aufweist.

5. Copolymer nach Anspruch 1, wobei das Polymer ein verzweigtes inneres Blockcopolymer ist, und G und J eine relative Molekülmasse von 1000 Dalton oder weniger aufweisen, und L eine relative Molekülmasse von mindestens 1000 Dalton aufweist, und wobei das Kettenübemagungsmittel eine relative Molekülmasse von 1000 Dalton oder weniger aufweist.

6. Copolymer nach Anspruch 1, wobei das Polymer ein verzweigtes äußeres Blockcopolymer ist, und das Kettenübertragungsmittel eine relative Molekülmasse von mindestens 1000 Dalton aufweist, und G, J und L eine relative Molekülmasse von 1000 Dalton oder weniger aufweisen.

7. Copolymer nach Anspruch 1, wobei das Polymer ein verzweigtes Pfropf-Blockcopolymer ist, und G, J und L eine relative Molekülmasse von mindestens 1000 Dalton aufweisen, und wobei das Kettenübertragungsmittel eine relative Molekülmasse von mindestens 1000 Dalton aufweist.

8. Copolymer nach einem der vorhergehenden Ansprüche, wobei G und J jeweils unabhängig einen Rest eines monofunktionellen Monomers darstellen, das aus Vinylsäuren, Vinylsäureestern, Vinylarylverbindungen, Vinylsäureanhydriden, Vinylamiden, Vinylethern, Vinylaminen, Vinylarylaminen, Vinylnitrilen, Vinylketonen und Derivaten davon; hydroxylhaltigen Monomeren und Monomeren, welche nachträglich umgesetzt werden können, um Hydroxylgruppen zu bilden; säurehaltigen oder funktionellen Säuremonomeren; zwitterionischen Monomeren; quaternisierten Aminomonomeren, polymeren Monomeren; und entsprechenden Allylmonomeren der zuvor erwähnten Vinylmonomere ausgewählt ist.

9. Copolymer nach einem der vorhergehenden Anspruch, wobei 1 0,05 bis 50, vorzugsweise 0,05 bis 40, insbesondere 0,05 bis 30 und ganz besonders 0,05 bis 15 ist.

10. Copolymer nach einem der vorhergehenden Ansprüche, wobei L ein Rest eines multifunktionellen Monomers ist, das aus Di- oder Multivinylestern, Di- oder Multivinylamiden, Di- oder Multinvinylarylverbindungen und Di- oder Multivinylalk/aryletheren ausgewählt ist.

11. Copolymer nach einem der vorhergehenden Ansprüche, wobei der Rest des Initiators 0,01 bis 5 Gew.% und vorzugsweise 0,01 bis 3 Gew.% des Copolymers bezogen auf das Gesamtgewicht der Monomere umfasst, und wobei der Initiator aus azohaltigen Molekülen, Peroxosulfaten, Redox-Initiatoren, Peroxiden, Benzylketonen und Inifertern ausgewählt ist.

12. Verfahren zur Herstellung eines verzweigten Copolymers nach einem der vorhergehenden Ansprüche durch einen Additionspolymerisationsprozess, welches ein Miteinandermischen von Folgendem umfasst:
(a) mindestens einem multifunktionellen Mononomer;
(b) mindestens 0,05 Mol-% (bezogen auf die Gesamt-Molzahl von monofunktionellem Monomer) eines monofunktionellen Monomers;
(c) einem Kettenübertragungsmittel; und
(d) einem Initiator; und anschließendes Umsetzen der Mischung, um ein verzweigtes Copolymer zu bilden.

13. Zusammensetzung, umfassend ein verzweigtes Copolymer nach einem der vorhergehenden Ansprüche 1 bis 11 und einen Träger.

14. Verwendung eines verzweigten Copolymers nach einem der Ansprüche 1 bis 11 als einen Bestandteil einer Waschmittelzusammensetzung und/oder ein Kolloidstabilisierungsmittel.

## Revendications

1. Polymère ramifié pouvant être obtenu par une polymérisation par addition, qui est le produit de réaction de :
(a) un initiateur,
(b) un agent de transfert de chaîne compatible (E et E'),
(c) au moins un monomère monoinsaturé éthylénique (G et/ou J),
(d) au moins un monomère polyinsaturé éthylénique (L),
dans lequel au moins l'un de (a) à (d) a un poids moléculaire d'au moins 1000 daltons, et
le rapport en moles de (d) à (c) est supérieur à 0,0005 à 1 et
ayant la formule générale 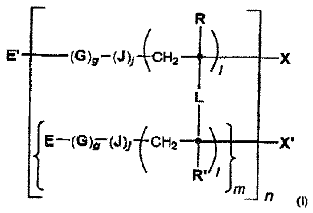 dans laquelle
E et E' représentent chacun indépendamment un résidu d'un agent de transfert de chaîne ou un initiateur ;
G et J représentent chacun indépendamment un résidu d'un monomère monofonctionnel ayant une double liaison polymérisable par molécule ;
L est un résidu d'un monomère multifonctionnel ayant au moins deux doubles liaisons polymérisables par molécule ;
R et R' représentent chacun indépendamment un atome d'hydrogène ou un groupe alkyle facultativement substitué ;
X et X' représentent chacun indépendamment un groupe terminal dérivé d'une réaction de terminaison ;
g, j et l représentent le rapport molaire de chaque résidu normalisé de sorte que g + j = 100, où g et j représentent chacun indépendamment 0 à 100, et l est ≥ 0,05 ; et
m et n sont chacun indépendamment ≥ 1 ; et
au moins l'un de E, E', G, J et L a un poids moléculaire d'au moins 1000 daltons et dans lequel le résidu de l'agent de transfert de chaîne comprend de 0,05 à 30 % en moles sur la base du nombre de moles du monomère monofonctionnel, du copolymère et dans lequel l'agent de transfert de chaîne est choisi parmi des thiols monofonctionnels et multifonctionnels et des agents de transfert de chaîne catalytiques.

2. Copolymère selon la revendication 1 dans lequel le polymère est un polymère ramifié en peigne ou greffé, et au moins l'un de G et J a un poids moléculaire d'au moins 1000 daltons, et L a un poids moléculaire de 1000 daltons ou moins.

3. Copolymère selon la revendication 2, dans lequel l'autre de G et J, le cas échéant, ont un poids moléculaire de 1000 daltons ou moins.

4. Copolymère selon la revendication 2 ou 3 dans lequel le monomère monofonctionnel ayant un poids moléculaire d'au moins 1000 daltons est un monomère hydrophile et dans lequel l'agent de transfert de chaîne a un poids moléculaire de 1000 daltons ou moins.

5. Copolymère selon la revendication 1 dans lequel le polymère est un copolymère séquencé interne ramifié, et G et J ont un poids moléculaire de 1000 daltons ou moins, et L a un poids moléculaire d'au moins 1000 daltons et dans lequel l'agent de transfert de chaîne a un poids moléculaire de 1000 daltons ou moins.

6. Copolymère selon la revendication 1 dans lequel le polymère est un copolymère séquencé externe ramifié, et l'agent de transfert de chaîne a un poids moléculaire d'au moins 1000 daltons, et G, J et L ont un poids moléculaire de 1000 daltons ou moins.

7. Copolymère selon la revendication 1 dans lequel le polymère est un copolymère séquencé greffé ramifié, et G, J et L ont un poids moléculaire d'au moins 1000 daltons et dans lequel l'agent de transfert de chaîne a un poids moléculaire d'au moins 1000 daltons.

8. Copolymère selon l'une quelconque des revendications précédentes, dans lequel G et J représentent chacun indépendamment un résidu d'un monomère monofonctionnel choisi parmi des acides vinyliques, des esters d'acide vinylique, des composés vinylaryle, des anhydrides d'acide vinylique, des amides vinyliques, des éthers vinyliques, des vinylamines, des vinylarylamines, des vinylnitriles, des vinylcétones, et des dérivés de ceux-ci ; des monomères contenant un hydroxyle et des monomères qui peuvent subir une post-réaction pour former des groupes hydroxyle ; des monomères contenant un acide ou à fonction acide ; des monomères zwitterioniques ; des monomères d'amino quaternarisé, des monomères polymères ; et les monomères allyliques correspondants des monomères vinyliques mentionnés ci-dessus.

9. Copolymère selon l'une quelconque des revendications précédentes dans lequel 1 est de 0,05 à 50, de préférence de 0,05 à 40, plus préférablement de 0,05 à 30 et en particulier de 0,05 à 15.

10. Copolymère selon l'une quelconque des revendications précédentes, dans lequel L est un résidu d'un monomère multifonctionnel choisi parmi des esters di- ou multivinyliques, des amides di- ou multivinyliques, des composés aryle di- ou multivinyliques et des éthers d'alk/aryle di- ou multivinyliques.

11. Copolymère selon l'une quelconque des revendications précédentes, dans lequel le résidu de l'initiateur comprend de 0,01 à 5 % m/m, de préférence de 0,01 à 3 % m/m, du copolymère sur la base du poids total des monomères et dans lequel l'initiateur est choisi parmi des molécules contenant un azo, des persulfates, des initiateurs redox, des peroxydes, des benzylcétones et des iniferters.

12. Procédé de préparation d'un copolymère ramifié selon l'une quelconque des revendications précédentes par un procédé de polymérisation par addition, qui comprend le mélange conjointement de
(a) au moins un monomère mono fonctionnel ;
(b) au moins 0,05 % en moles (sur la base du nombre de moles de monomère monofonctionnel) d'un monomère multifonctionnel ;
(c) un agent de transfert de chaîne ; et
(d) un initiateur; et ensuite la réaction dudit mélange pour former un copolymère ramifié.

13. Composition comprenant un copolymère ramifié selon l'une quelconque des revendications 1 à 11 et un support.

14. Utilisation d'un copolymère ramifié selon l'une quelconque des revendications 1 à 11 en tant que constituant d'une composition de blanchisserie et/ou en tant qu'agent de stabilisation de colloïde.
